# EUROPEAN PATENT SPECIFICATION

(11) **EP 0 774 346 B1**
(45) Date of publication and mention of the grant of the patent: **19.03.2003**
(21) Application number: 96308337.3
(22) Date of filing: 15.11.1996
(51) Int. Cl.: B32B 27/18, B32B 27/32

(54) **Polymeric films**
Polymerfilme
Films en polymère

(30) Priority: 15.11.1995 GB 9523312
(43) Date of publication of application: 21.05.1997
(73) Proprietor: Trespaphan GmbH, 66539 Neunkirchen (DE)
(72) Inventor: Alder, Paul Thomas, Swindon, Wiltshire SN2 4BG (GB); King, Dawn Janine, Swindon, Wiltshire SN6 6BT (GB)
(74) Representative: Luderschmidt, Schüler & Partner GbR

(56) References cited:
- EP-A- 0 620 114
- WO-A-96/18497
- GB-A- 2 296 889
- US-A- 5 443 915
- US-A- 5 489 473

## Description

This invention concerns polymeric films, and in particular polypropylene films, having good hot and cold slip characteristics for treated and untreated film surfaces.

It is known in the polypropylene film art to modify the slip characteristics of such films by a variety of methods. One such method is to incorporate into the films one or more additives in a core layer of the films, the additives being such that they migrate from the core layer through outer film layers so that they form a surface layer on the outer layers of the films. Typical of such additives are fatty acid amides and glyceryl esters of long chain fatty acids.

Polyolefin films containing migratory additives can in general be printed, especially if the surface of the films to be printed is subjected to a treatment which increases the surface energy of the films, such methods being well known in the polypropylene film art.

However, one major disadvantage of using migratory additives to modify the slip characteristics of polypropylene films is that the slip characteristics tend to change with time. Thus immediately after the films have been manufactured, when little or no slip additive has migrated to the film surface, the films have relatively poor slip properties, whereas after storage of the films for some time, the films can become excessively slippery with consequent difficulties in using the films in packaging machinery. Furthermore, increasing amounts of migrated additives on the film surface over a period of time can reduce the optical properties of the films.

An alternative approach to the problem of modifying the slip characteristics of polypropylene films has been to include non-migratory slip agents in the outer surfaces of such films. Whilst the antiblock agents which are usually included in the outer surface layers of polypropylene films do modify the inherently poor slip properties of the polymers of which the outer surfaces are made, such agents generally cannot be used alone to provide the degree of slip which is required for such films. Hence the use of migratory separate slip agents.

Alternatively, a slip agent can be coated on to the outer surface of the films rather than incorporating it within the body of the film.

Silicones, and in particular polydiorganosiloxanes, have frequently been proposed hitherto as slip-imparting, non-migratory slip additives for adding to the outer layers of polypropylene films. They have also been used as slip imparting coatings which are applied to the outer surfaces of polypropylene films.

The use of these materials has the advantage that the slip properties of the films in general do not change with time, their slip properties being substantially constant from manufacture and throughout storage over substantial periods of time. One major disadvantage of using silicones to modify the slip characteristics of the films is that they tend to reduce the printability of the films, especially when using water-based inks. Furthermore, treatment of films to improve their surface energy, and hence their printability, cannot in general be used on film surfaces which contain compounded silicone or have a silicone coating, as the treatment tends to have a highly adverse effect on the silicone, for example leading to a reduction in the slip characteristics of the film surface and/or the heat sealability of the film surface when such a surface is otherwise heat sealable.

According to the present invention there is provided a biaxially oriented polyolefin film comprising a base layer comprising a propylene polymer with an outer, printable layer thereon, the base layer containing at least 1000ppm of a glyceryl mono-ester of a fatty acid based on the weight of the base layer and the outer layer including a blend of a cross-linked silicone antiblock agent and an inorganic antiblock agent wherein the outer layer is formed from a polyolefin or from a blend of two or more olefin polymers.

Films in accordance with the present invention have shown good slip properties from manufacture, such properties being achieved with much less of a change in the slip properties over a period of time. Furthermore, a particularly good control of slip properties can be achieved compared with films which use a silicone in an outer layer instead of a migratory fatty acid amide as a slip agent. In addition to these advantages, films in accordance with the present invention have shown good optical properties and good machinability. These properties have also been observed in combination with good printability, especially with water-based inks.

The base layer is formed from a propylene polymer which is preferably a propylene homopolymer or a polymer of propylene and a minor amount, preferably less than 2wt%, of a comonomer, for example ethylene.

The base layer of films of the present invention contain at least 1000ppm of a glyceryl mono-ester of a long chain fatty acid, and preferably at least 1500ppm, based on the weight of the base layer. Increasing the amount of glyceryl mono-ester in the base layer generally increases the slip of the films, but there comes a point where a further increase in slip with increasing amounts of glyceryl mono-ester is marginal and may even be accompanied by undesirable effects. It is therefore preferred not to use more than about 6000ppm of a glyceryl mono-ester based on the weight of the base layer. The particularly preferred range of amounts of glyceryl mono-ester for the base layer are from 1000 to 4500ppm, based on the weight of the base layer.

Examples of glyceryl mono-esters which can be used include glyceryl mono-stearate, glyceryl mono-behenate acid, and glycerides of hydroxy-fatty acids, for example glyceryl tri-(12-hydroxy)stearate.

Other migratory additives can be included in the base layer, for example fatty acid amides. The amount of fatty acid amide in the base layer is preferably not more than 5000ppm based on the weight of the base layer, as higher amounts can adversely affect the ability of the outer layer to heat seal under low pressures when it is of a heat sealable polymer. Advantageously, the amount of fatty acid amide in the outer layer is less than 4000ppm, and more especially from 1000 to 3750ppm, based on the weight of the base layer. If the amount of fatty acid amide is reduced excessively, the beneficial effects of its presence may not be observed.

Fatty acid amides and derivatives thereof which can be used as slip agent in the base layer of films in accordance with the present invention include amides of C₁₀₋₄₀ fatty acids and of the corresponding hydroxy fatty acids, and derivatives thereof, for example erucamide, oleamide, ethylene bis-stearamide, stearyl erucamide, and oleyl palmitamide.

The base layer preferably also contains a migratory anti-static agent, for example a bis-(hydroxyalkyl)-(C₁₀₋₂₀)alkylamine, preferably derived from an alkylamine containing from 12 to 18 carbon atoms. The hydroxyalkyl group of such compounds is preferably a 2-hydroxyethyl group. An example of a specific antistatic agent which can be used in the base layer is bis-(2-hydroxyethyl)-tallow amine.

The amount of migratory antistatic agent used in the base layer is preferably from 0.01 to 0.20.wt% of the base layer.

The outer layer is preferably formed from a polyolefin which is or can be rendered printable, for example by a suitable surface treatment. The outer layer is also preferably heat sealable. Examples of polyolefins which can be used to form the outer layer include copolymers of propylene with at least one of ethylene and butene-1, e.g. propylene/ethylene copolymers and propylene/ethylene/butene-1 terpolymers. The outer layer can also be formed from a blend of two or more olefin polymers.

The said outer layer of films of the present invention contains a blend of a cross-linked silicone antiblock agent and an inorganic antiblock agent. The total amount of these two types of antiblock agent present in the outer layer is preferably not more than 5000ppm based on the weight of the outer layer, higher amounts tending to reduce the heat sealability of the outer layer when such is made of a heat sealable polymer. The total amount of these antiblock agents is preferably less than 4000ppm based on the weight of the outer layer, and more preferably from 1000 to 3750ppm. If insufficient antiblock agent is present, the films will exhibit blocking.

It is generally preferred that the mixture of antiblock agents in the outer layer contains from 25 to 75 wt%, preferably from 40 to 60wt%, of cross-linked silicone, and from 75 to 25wt%, preferably from 60 to 40wt%, of an inorganic antiblock agent.

The cross-linked silicone antiblock agent is preferably as described in EP0242055-A. The inorganic antiblock agent can be selected from antiblock agents proposed hitherto in the polypropylene film art, for example silica, and silicates.

The mean particle size of each antiblock agent will usually be in the range of from 1 to 6µm. In general, the relative sizes of the two different types of antiblock agent is not significant to achieving the effect achieved by the present invention, and one antiblock agent can therefore have a relatively small mean particle size whilst the other has a relatively large mean particle size. However, if the mean particle sizes of the two types of antiblock agent are of significantly different, adverse effects caused by such differences can be reduced by adjusting the amount of fatty acid amide in the base layer as this can reduce the effects of such differences in mean particle size.

Films in accordance with the present invention can consist merely of the two specified layers. However, it is generally preferred that the base layer has a further layer thereon remote from the specified outer layer, thereby making the films three-layer. Further layers can also be present, for example between the specified outer layer and the base layer, or between the base layer and ant further layer or layers on the side of the base layer remote from the specified outer layer.

The further outer layer is preferably of an olefin polymer, for example of the same composition as the specified outer layer. However, it is preferably of a different composition from that of the particularly specified outer layer since this can enable differential slip properties to be achieved between the outer surfaces of the films even if the two outer layers contain substantially identical blends of a cross-linked silicone antiblock agent and an inorganic antiblock agent. Particularly preferred films in accordance with the present invention have one outer surface formed from a propylene/ethylene copolymer with the other surface formed from a blend of a propylene/ethylene copolymer and a propylene/ethylene/butene-1 terpolymer. Such films have shown differential slip which makes them of particular advantage in overwrapping articles where film to article slip is desirably lower than film to film slip for the overwrapped articles.

It is generally preferred not to add a fatty acid amide in the outer layer or layers of films of the present invention, other than that which may of necessity be present as a dispersing agent for the antiblock agents which are included in these layers.

The outer layer or layers of films of the present invention can include an antistatic agent, preferably an alkyl sulfonate.

It is generally preferred to subject the outer layer containing the blend of cross-linked silicone antiblock agent and the inorganic antiblock agent to a treatment which increases its surface energy, for example corona discharge treatment or flame treatment.

If desired, one or more layers of films of the present invention can include organic or inorganic particles which induce the formation of microvoids when they are biaxially stretched. In general, the voided layer will be the base layer, but other layers which may be present which can be voided, these normally being those consisting of a propylene polymer with substantially all units derived from propylene. Examples of particulate materials which can be used to induce voiding include polyamides, for example nylons, polyesters, for example polyethylene terephthalate and polybutylene terephthalate, chalk, barium sulfate and zinc sulfide. In general these particulate materials should have a mean particle size of from 1 to 10µm in order to effect voiding.

Any of the various layers of films of the present invention can, if desired, contain a pigment, for example titanium dioxide.

Films in accordance with the present invention can be produced by known methods, for example by coextrusion of the base layer and the specified outer layer, and with any further layers which are desired, and then biaxially stretching the coextrudate. The biaxial stretching can be effected simultaneously in the direction of extrusion and in the transverse direction using the so-called bubble process. However, it is preferred to effect the stretching sequentially by first stretching the web in the direction of extrusion and then in the transverse direction. Sequential stretching is particularly preferred when it is desired to make films having one or more layers which include microvoids.

The following Examples are given by way of illustration only. In each case, the films were tested for their slip properties according to the following methods.

Cold slip was tested using a Davenport slip tester with a 700g sled and a sled speed of 80cm/min. Hot slip was tested using a RDM CF800 slip testing apparatus at 40°C, 60°C and 80°C, with a 700g sled. Film/film hot slip tests were performed by taping film to the hot plate of the tester.

Film gloss was tested at 20°, and the heat seal threshold temperature of the films was tested using a gradient bar.

Film/film rub tests were performed by initially wrapping the film to be tested around a block with the treated film surface on the outside. The film was heat sealed around the block with the seal along the side of the block. The wrapped blocks were then heated in an oven at 100°C until the interior of the blocks had reached 40°C, and film/film hot slip was then assessed by rubbing two heated blocks together. The assessment was made on a subjective scale from 1, being the most slippery, upwards.

### Example 1

A three layer polymer web was produced by coextruding a base layer of propylene homopolymer containing 3.5wt% of chalk (mean particle size 3.5µm), 1.6wt% of titanium dioxide, 0.03wt% of bis-ethoxylated amine, 0.064wt% of erucamide and 0.128wt% of glyceryl mono-stearate, with two outer layers on each surface of the base layer. The two outer layers consisted of a propylene/ethylene/butene-1 copolymer (91.4wt% propylene, 3.8wt% ethylene, 4.7wt% butene-1) containing 0.2wt% of a cross-linked silicone (Tospearl 120, ex GE Silicones - mean particle size 2µm), 0.1wt% of a further cross-linked silicone (Tospearl 145, ex GE Silicones - mean particle size 4.5µm) and 0.125wt% of silica with a mean particle size of 4µm.

The coextruded three layer web was then stretched 4.5 times in the direction of extrusion by passing it over a series of rollers at 120°C rotating at differential peripheral speeds, and then 10 times in the transverse direction in a stenter oven at 160°C.

The first outer layer of the biaxially stretched film was then subjected to corona discharge treatment, and the film was finally wound up. The film had a total thickness of 40µm, each outer layer being 1.5µm thick.

The coefficient of friction for the treated face to metal, evaluated as described above at 40°C, was 0.19.

### Example 2

A three layer polymer web was produced by coextruding a base layer of propylene homopolymer containing 3.5wt% of chalk (mean particle size 3.5µm), 1.6wt% of titanium dioxide, 0.03wt% of bis-ethoxylated amine, 0.064wt% of erucamide and 0.328wt% of glyceryl mono-stearate, with two outer layers on each surface of the base layer. The two outer layers consisted of a propylene/ethylene/butene-1 copolymer (91.4wt% propylene, 3.8wt% ethylene, 4.7wt% butene-1) containing 0.1wt% of a cross-linked silicone (Tospearl 120, ex GE Silicones - mean particle size 2µm), 0.15wt% of a further cross-linked silicone (Tospearl 145, ex GE Silicones - mean particle size 4.5µm) and 0.165wt% of silica with a mean particle size of 4µm.

The coextruded three layer web was then stretched 4.5 times in the direction of extrusion by passing it over a series of rollers at 120°C rotating at differential peripheral speeds, and then 10 times in the transverse direction in a stenter oven at 160°C.

The first outer layer of the biaxially stretched film was then subjected to corona discharge treatment, and the film was finally wound up. The film had a total thickness of 40µm, each outer layer being 1.5µm thick.

The coefficient of friction for the treated face to metal, evaluated as described above at 40°C, was 0.18.

### Example 3 (comparison)

A three layer polymer web was produced by coextruding a base layer of propylene homopolymer containing 3.5wt% of chalk (mean particle size 3.5µm), 1.6wt% of titanium dioxide, 0.03wt% of bis-ethoxylated amine, 0.064wt% of erucamide and 0.128wt% of glyceryl mono-stearate, with two outer layers on each surface of the base layer. The two outer layers consisted of a propylene/ethylene copolymer (3.7wt% ethylene) containing 0.1wt% of silica with a mean particle size of 4µm.

The coextruded three layer web was then stretched 4.5 times in the direction of extrusion by passing it over a series of rollers at 120°C rotating at differential peripheral speeds, and then 10 times in the transverse direction in a stenter oven at 160°C.

The first outer layer of the biaxially stretched film was then subjected to corona discharge treatment, and the film was finally wound up. The film had a total thickness of 40µm, each outer layer being 1.5µm thick.

The coefficient of friction for the treated face to metal, evaluated as described above at 40°C, was 0.23.

### Example 4

A three layer polymer web was produced by coextruding a base layer of propylene homopolymer containing 3.5wt% of chalk (mean particle size 3.5µm), 1.6wt% of titanium dioxide, 0.03wt% of bis-ethoxylated amine, 0.06wt% of erucamide and 0.33wt% of glyceryl mono-stearate, with two outer layers on each surface of the base layer. The two outer layers forming consisted of a propylene/ethylene/butene-1 copolymer (90.7wt% propylene, 3.7wt% ethylene, 5.6wt% butene-1) containing 0.10wt% of a cross-linked silicone (Tospearl 120, ex GE Silicones - mean particle size 2µm), 0.15wt% of a further cross-linked silicone (Tospearl 145, ex GE Silicones - mean particle size 4.5µm) and 0.165wt% of silica with a mean particle size of 4µm.

The coextruded three layer web was then stretched 4.5 times in the direction of extrusion by passing it over a series of rollers at 120°C rotating at differential peripheral speeds, and then 10 times in the transverse direction in a stenter oven at 160°C.

The first outer layer of the biaxially stretched film was then subjected to corona discharge treatment, and the film was finally wound up. The film had a total thickness of 40µm, each outer layer being 1.2µm thick.

The treated face of the film had good hot and cold slip properties, both to itself and to metal.

## Claims

1. A biaxially oriented polyolefin film comprising a base layer comprising a propylene polymer with an outer layer thereon, the base layer containing at least 1000 ppm of a glyceryl mono-ester of a fatty add based on the weight of the base layer and the outer layer including a blend of a cross linked silicone antiblock agent and an inorganic antiblock agent, wherein the outer layer is formed from a polyolefin or from a blend of two or more olefin polymers.

2. A film according to claim 1, wherein the base layer contains not more than 6000ppm of a glyceryl mono-ester of a fatty acid based on the weight of the base layer.

3. A film according to either of the preceding claims, wherein the base layer contains from 1000 to 4500ppm of a glyceryl mono-ester of a fatty acid based on the weight of the base layer.

4. A film according to any of the preceding claims, wherein the glyceryl mono-ester of a fatty acid comprises glyceryl mono-stearate, glyceryl mono-behenate, or glyceryl tri-(12-hydroxy)stearate.

5. A film according to any of the preceding claims, wherein the blend of antiblock agents in the said outer layer is present in an amount of not more than 5000ppm based on the weight of the outer layer.

6. A film according to any of the preceding claims, wherein the blend of antiblock agents in the said outer layer is present in an amount of from 1000 to 3750ppm based on the weight of the outer layer.

7. A film according to any of the preceding claims, wherein the blend contains from 25 to 75 wt% of cross-linked silicone and from 75 to 25wt% of an inorganic antiblock agent.

8. A film according to claim 7, wherein the blend contains from 40 to 60 wt% of cross-linked silicone and from 60 to 40wt% of an inorganic antiblock agent.

9. A film according to any of the preceding claims, wherein the mean particle size of the blend of antiblock agents in the said outer layer is from 1 to 6µm.

## Patentansprüche

1. Biaxial orientierte Polyolefinfolie, umfassend eine Grundschicht aus einem Propylenpolymer mit einer Außenschicht darüber, wobei die Grundschicht mindestens 1000 ppm eines Glycerylmonoesters einer Fettsäure, bezogen auf das Gewicht der Grundschicht, und die Außenschicht ein Gemisch aus einem vernetzten Siliconantiblockmittel und einem anorganischen Antiblockmittel enthält und wobei die Außenschicht aus einem Polyolefin oder aus einem Gemisch aus zwei oder mehreren Olefinpolymeren gebildet wird.

2. Folie gemäß Anspruch 1, wobei die Grundschicht höchstens 6000 ppm Glycerylmonoester einer Fettsäure enthält, bezogen auf das Gewicht der Grundschicht.

3. Folie gemäß einem der vorausgehenden Ansprüche, wobei die Grundschicht 1000 - 4500 ppm Glycerylmonoester einer Fettsäure enthält, bezogen auf das Gewicht der Grundschicht.

4. Folie gemäß einem der vorausgehenden Ansprüche, wobei der Glycerylmonoester einer Fettsäure Glycerylmonostearat, Glycerylmonobehenat oder Glyceryltri-(12-hydroxy)-stearat umfaßt.

5. Folie gemäß einem der vorausgehenden Ansprüche, wobei das Antiblockmittelgemisch in der genannten Außenschicht in einer Menge von höchstens 5000 ppm vorliegt, bezogen auf das Gewicht der Außenschicht.

6. Folie gemäß einem der vorausgehenden Ansprüche, wobei das Antiblockmittelgemisch in der genannten Außenschicht in einer Menge von 1000- 3750 ppm vorliegt, bezogen auf das Gewicht der Außenschicht.

7. Folie gemäß einem der vorausgehenden Ansprüche, wobei das Gemisch 25 - 75 Gewichtsprozent vernetztes Siliconantiblockmittel und 75 - 25 Gewichtsprozent anorganisches Antiblockmittel enthält.

8. Folie gemäß Anspruch 7, wobei das Gemisch 40 - 60 Gewichtsprozent vernetztes Siliconantiblockmittel und 60 - 40 Gewichtsprozent anorganisches Antiblockmittel enthält.

9. Folie gemäß einem der vorausgehenden Ansprüche, wobei die mittlere Teilchengröße des Antiblockmittelgemisches in der genannten Außenschicht 1 - 6 µm beträgt.

## Revendications

1. Film de polyoléfine à orientation biaxiale comprenant une couche de base en un polymère de propylène avec une couche externe au-dessus, la couche de base contenant au moins 1000 ppm d'un monoester de glycéryle d'un acide gras, rapporté au poids de la couche de base, et la couche externe un mélange d'un agent anti blocking aux silicones réticulé et d'un agent anti blocking inorganique, la couche externe étant constituée d'un polyoléfine ou d'un mélange de deux ou de plusieurs polymères d'oléfines,

2. Film selon la revendication 1, la couche de base contenant au plus 6000 ppm de monoester de glycéryle d'un acide gras, rapporté au poids de la couche de base.

3. Film selon l'une des revendications ci-avant, la couche de base contenant 1000 à 4500 ppm de monoester de glycéryle d'un acide gras, rapporté au poids de la couche de base.

4. Film selon l'une des revendications ci-avant, le monoester de glycéryle d'un acide gras comprenant du monostéarate de glycéryle ou du monobéhénate de glycéryle ou du tristéarate (hydroxy-12) de glycéryle.

5. Film selon l'une des revendications ci-avant, le mélange d'agents anti blocking étant présent dans la couche externe mentionnée dans une quantité d'au plus 5000 ppm, rapporté au poids de la couche externe.

6. Film selon l'une des revendications ci-avant, le mélange d'agents anti blocking étant présent dans la couche externe mentionnée dans une quantité de 1000 à 3750 ppm, rapporté au poids de la couche externe.

7. Film selon l'une des revendications ci-avant, le mélange contenant 25 à 75 % en poids d'agent anti blocking aux silicones réticulé et 75 à 25 % en poids d'agent anti blocking inorganique.

8. Film selon la revendication 7, le mélange contenant 40 à 60 % en poids d'agent anti blocking aux silicones réticulé et 60 à 40 % d'agent anti blocking inorganique.

9. Film selon l'une des revendications ci-avant, la taille moyenne des particules du mélange d'agents anti blocking dans la couche externe mentionnée étant de 1 à 6 µm.
